# FASCICULE DE BREVET EUROPEEN

(11) **EP 4 291 493 B1**
(45) Date de publication et mention de la délivrance du brevet: **03.07.2024**
(21) Numéro de dépôt: 22722314.6
(22) Date de dépôt: 14.04.2022
(51) Int. Cl.: B64G 1/50

(54) **STRUCTURE THERMOMÉCANIQUE POUR PLAN FOCAL D'INSTRUMENT D'OBSERVATION SPATIALE**
THERMOMECHANISCHE STRUKTUR FÜR DIE FOKALEBENE EINES RAUMBEOBACHTUNGSINSTRUMENTS
THERMOMECHANICAL STRUCTURE FOR FOCAL PLANE OF A SPACE OBSERVATION INSTRUMENT

(30) Priorité: 26.04.2021 FR 2104329
(43) Date de publication de la demande: 20.12.2023
(73) Titulaire: Airbus Defence and Space SAS, 31402 Toulouse Cedex 4 (FR)
(72) Inventeur: CARPONCIN, Delphine, 31402 Toulouse cedex 4 (FR); LEFOLL, Sébastien, 31402 Toulouse cedex 4 (FR); FIGUS, Christophe, 31402 Toulouse cedex 4 (FR)
(74) Mandataire: Ipside
(86) Numéro de dépôt international: PCT/FR2022/050707
(87) Numéro de publication internationale: WO 2022/229537

(56) Documents cités:
- WO-A1-2020/123683
- FR-A1- 3 040 777
- US-A1- 2011 209 864
- US-A1- 2019 315 500
- US-A1- 2020 407 615

## Description

### DOMAINE TECHNIQUE

La présente invention appartient au domaine des systèmes spatiaux, notamment du contrôle thermique des équipements embarqués dans un engin spatial tel qu'un satellite artificiel, et concerne plus particulièrement une structure thermomécanique pour plan focal d'instrument d'observation spatiale et un plan focal comprenant une telle structure.

La présente invention trouve une application directe dans les satellites d'observation de la Terre.

### ÉTAT DE L'ART

Dans un instrument d'observation spatiale, tel qu'un télescope ou un interféromètre, et plus généralement dans tout ensemble analogue de détection optique, le plan focal permet de supporter différents détecteurs optiques ou autres équipements électroniques et matérialise le foyer image dans lequel le système optique (miroirs, lentilles, etc.) focalise les photons incidents pour ainsi former les images des objets observés.

De ce fait, le plan focal nécessite d'être maintenu aux températures de fonctionnement nominal des détecteurs qu'il supporte, et revêt donc une importance capitale dans la performance de l'instrument d'observation.

Actuellement, les plans focaux sont généralement obtenus par un assemblage complexe de pièces mécaniques et thermiques comprenant, entre autres, une plaque en matériau céramique coûteuse sur laquelle des dizaines de pièces sont fixées. Le processus d'intégration est généralement long et délicat.

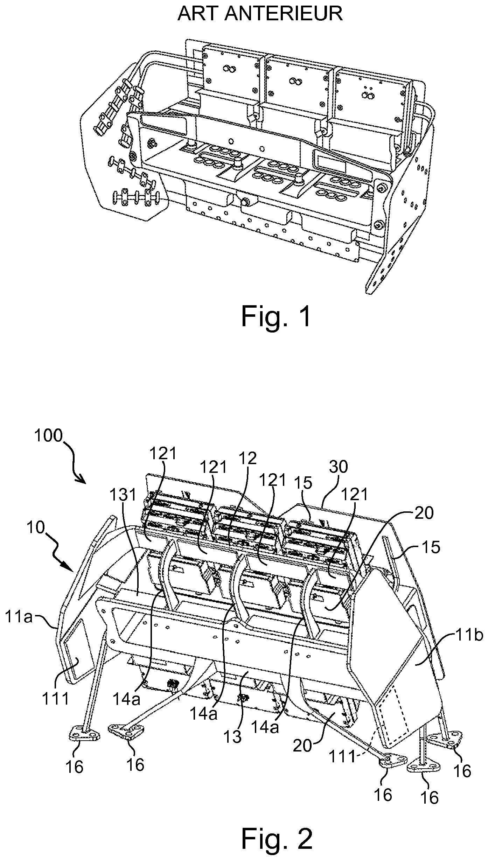

La figure 1 représente un exemple de plan focal selon l'art antérieur constitué de plus d'une vingtaine de pièces assemblées, principalement en carbure de silicium SiC et en aluminium, dans lequel des caloducs sont plaqués le long de radiateurs latéraux et les couplent thermiquement aux équipements électroniques dissipatifs. Le document FR3040777, intitulé « ensemble de détection optique comportant un détecteur optique à contrôle thermique amélioré, instrument d'observation et satellite comportant un tel ensemble de détection optique », décrit un dispositif de contrôle thermique pour maintenir un détecteur à une température de fonctionnement prédéfinie, ce dispositif comprenant une platine en céramique, une cale de réglage et un matériau à changement de phase PCM (*Phase Change Material* en terminologie anglo-saxonne) logé dans une cavité de la cale, sans être au contact ni de la cale ni de la platine, mais en étant directement au contact du détecteur. Cette solution reste toutefois complexe à mettre en oeuvre notamment pour des plans focaux de structures complexes et compactes.

Habituellement, on utilise des caloducs pour assurer le transport thermique entre les points chauds et les points froids d'un plan focal comme le montre l'exemple de la figure 1. Ces caloducs existent sous différentes formes et conceptions.

Le document WO2014/013035, intitulé « dispositif de contrôle thermique », décrit par exemple la mise en oeuvre d'un caloduc pour le contrôle thermique d'équipements électroniques dans un satellite, comprenant des interfaces thermiques sous la forme d'enceintes plates à structure poreuse reliées à des tubes caloporteurs à structure rainurée.

Il apparait ainsi un besoin de simplification des solutions existantes de contrôle thermique notamment en réduisant le nombre de pièces assemblées tout en intégrant un contrôle thermique efficace pour les applications spatiales visées.

### PRÉSENTATION DE L'INVENTION

La présente invention vise à pallier les inconvénients de l'art antérieur exposés ci-avant et propose une solution pour réaliser un plan focal avec un nombre réduit d'éléments structuraux, ayant des performances thermiques et des performances mécaniques au moins équivalentes aux plans focaux de l'art antérieur, tout en restant compétitif vis-à-vis des coûts de production.

À cet effet, la présente invention a pour objet une structure thermomécanique thermorégulée pour plan focal apte à fonctionner en environnement spatial, comprenant au moins une première interface pour supporter au moins un premier équipement électronique dissipatif. Cette structure est remarquable en ce qu'elle est métallique et en ce qu'elle comprend au moins un radiateur pour dissiper de la chaleur dans l'environnement spatial et au moins une première cavité de transport d'énergie calorifique par un fluide à changement de phase se trouvant à l'état liquide ou gazeux, ladite première cavité s'étendant en partie à l'intérieur dudit radiateur et assurant un transport thermique direct entre ladite première interface et ledit radiateur, ladite structure comprenant en outre au moins une deuxième cavité de stockage d'énergie calorifique encapsulant un matériau à changement de phase se trouvant à l'état solide ou liquide.

Avantageusement, chaque première cavité est distincte et disjointe de chaque deuxième cavité.

Selon une particularité de l'invention, la structure thermomécanique comprend une unique première cavité et une pluralité de deuxièmes cavités dont au moins certaines de ces deuxièmes cavités sont disposées au plus près de la première cavité.

Plus particulièrement, la première cavité s'étend au plus près de la première interface et contribue à étaler de manière homogène l'énergie générée au niveau du premier équipement électronique dissipatif.

De façon avantageuse, la première cavité comprend une géométrie interne de type poreux située au niveau de la première interface, assurant une diffusion multidirectionnelle de l'énergie calorifique, la géométrie interne de type poreux étant prolongée par une géométrie interne comprenant des rainures favorisant une diffusion de l'énergie calorifique le long de ces rainures, vers les radiateurs.

Selon une particularité de l'invention, la structure comprend au moins deux radiateurs, disposés latéralement et de part et d'autre de la première interface, la première cavité s'étendant dans ces radiateurs.

Selon un mode de réalisation de l'invention, la structure thermomécanique comprend au moins une deuxième interface pour supporter au moins un deuxième équipement électronique dissipatif, la première cavité s'étendant au plus près de ladite deuxième interface et assurant un transport thermique direct entre ladite deuxième interface et ledit radiateur.

Avantageusement, la première cavité comprend une géométrie interne de type poreux située au niveau de ladite deuxième interface, assurant une diffusion multidirectionnelle de l'énergie calorifique et contribuant à étaler de manière homogène l'énergie générée au niveau dudit deuxième équipement électronique dissipatif.

Selon une particularité de l'invention, la structure thermomécanique comprend une paire de premières interfaces et une paire de deuxièmes interfaces agencés symétriquement selon un plan médian, pour supporter respectivement une paire de premiers équipements électroniques dissipatifs et une paire de deuxièmes équipements électroniques dissipatifs agencés symétriquement selon le plan médian.

De façon avantageuse, la structure thermomécanique comprend une pluralité d'éléments de jonction entre la première interface et la deuxième interface et dans lesquels s'étend la première cavité diphasique.

Avantageusement, la structure thermomécanique est réalisée en un seul bloc monolithique composé de plusieurs sous-ensembles générés par fabrication additive par couche de matière, chaque sous-ensemble pouvant contenir une portion de la première cavité, une portion de la deuxième cavité, une portion de la première interface, et/ou une portion du radiateur.

Selon une particularité de l'invention, la structure thermomécanique comprend en outre une pluralité d'appendices de fixation dans lesquels s'étend la première cavité et destinés à recevoir un radiateur rapporté de dissipation de chaleur dans l'environnement spatial.

La présente invention a également pour objet un plan focal apte à fonctionner en environnement spatial, comprenant une structure thermomécanique telle que présentée et au moins un capteur photosensible fixé la première interface de ladite structure.

Plus particulièrement, ce plan focal comprend au moins un composant électronique de contrôle et de traitement en liaison de communication avec ledit capteur photosensible, ce composant électronique de contrôle et de traitement étant fixé sur la deuxième interface de la structure thermomécanique.

La présente invention a également pour objets un instrument d'observation spatiale comprenant un tel plan focal, et un satellite artificiel comprenant un tel instrument d'observation spatiale.

Plus particulièrement, le satellite artificiel comprend au moins un composant électronique dissipatif fixé sur une interface d'une structure thermomécanique telle que présentée.

Un avantage de la présente invention réside notamment dans une simplification du processus de mise en oeuvre d'un plan focal.

Un avantage est également son coût de production réduit par rapport aux coûts généralement induits pour la mise en oeuvre des plans focaux.

Un autre avantage réside dans l'efficacité du contrôle thermique de l'ensemble des détecteurs formant le plan focal permettant d'optimiser la qualité des signaux générés par les détecteurs. Une cavité de transport d'énergie calorifique, comprenant un fluide à changement de phase se trouvant à l'état liquide ou gazeux, et une cavité de stockage d'énergie calorifique, encapsulant un matériau à changement de phase se trouvant à l'état solide ou liquide, sont avantageusement combinées dans une structure métallique monobloc et permettent d'augmenter les capacités de stabilité thermique de la structure comprenant ces deux cavités.

Les cavités de stockage et les cavités de transport seront avantageusement disposées au plus près l'une de l'autre de manière à limiter l'épaisseur de matériau métallique à traverser par le flux thermique.

Avantageusement, les performances thermiques accrues permettent d'escompter un gain en masse supérieur à 5% par exemple pour une structure thermomécanique en INVAR par rapport à un plan focal classique en SiC.

Les concepts fondamentaux de l'invention venant d'être exposés ci-dessus dans leur forme la plus élémentaire, d'autres détails et caractéristiques de la présente invention ressortiront plus clairement à la lecture de la description qui suit et en regard des dessins annexés, donnés à titre d'exemple non limitatif.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : (déjà citée) un plan focal de l'art antérieur ;
- Figure 2 : une vue en perspective arrière d'un plan focal selon l'invention ;
- Figure 3 : une vue en perspective arrière de la structure thermomécanique du plan focal de la figure 2 ;

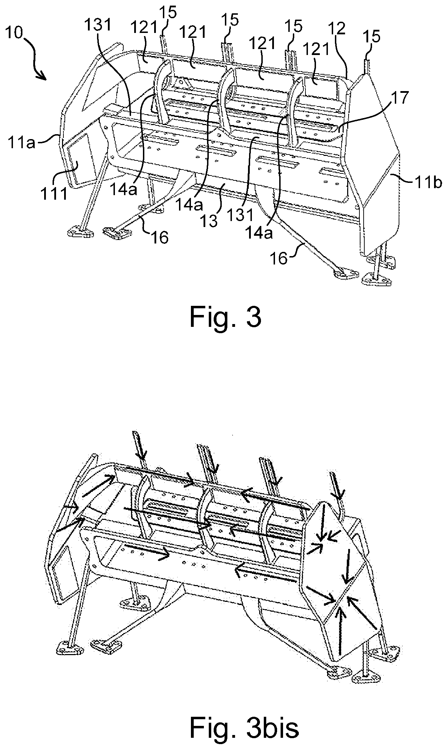

- Figure 3bis : une vue illustrant de façon schématique la circulation du fluide diphasique dans sa forme liquide

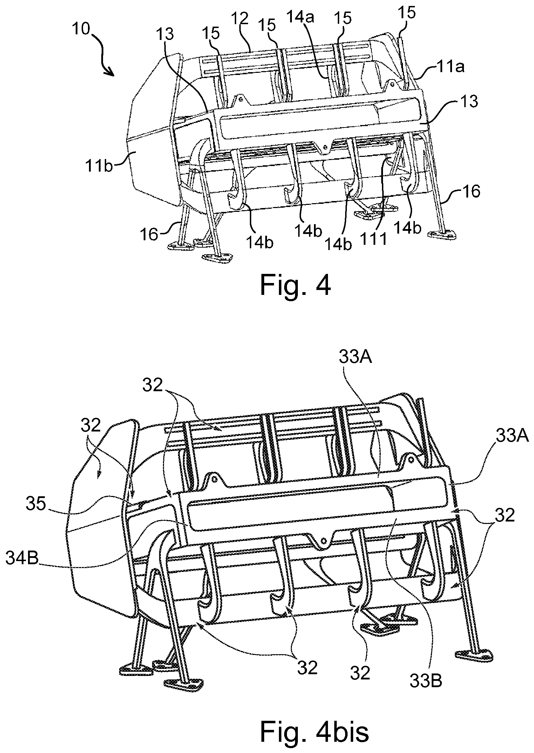

- Figure 4 : une vue en perspective avant de la structure thermomécanique du plan focal de la figure 2 ;
- Figure 4bis : une vue illustrant un exemple de cavité diphasique dans une structure thermomécanique selon l'invention ;

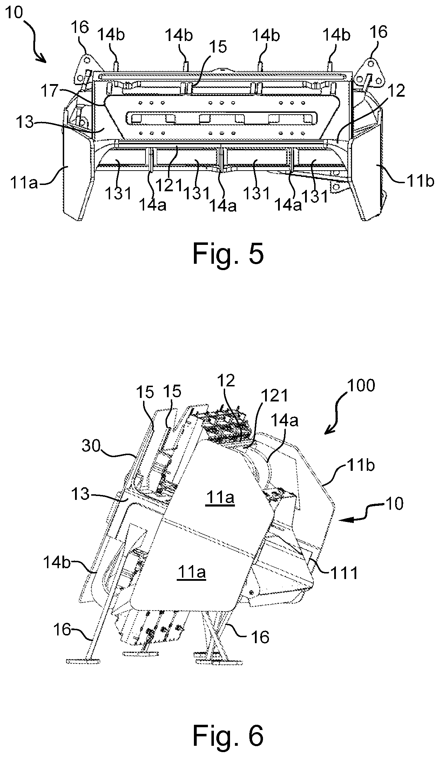

- Figure 5 : une vue de dessus de la structure thermomécanique du plan focal de la figure 2 ;
- Figure 6 : une vue en perspective de côté du plan focal de la figure 2 ;

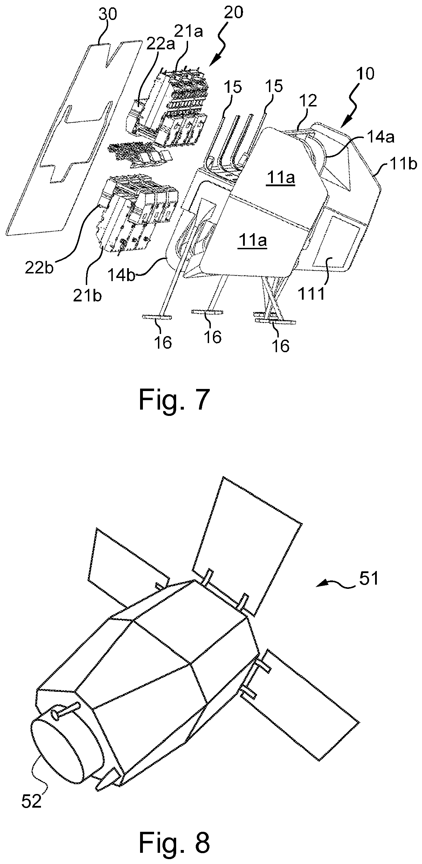

- Figure 7 : une vue en éclaté du plan focal de la figure 2 ;
- Figure 8 : une vue schématique d'un exemple de satellite équipé d'un instrument d'observation.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans la présente description, on fait référence à une structure thermomécanique pour plan focal, destinée principalement à un instrument d'observation spatiale. Cet exemple, non limitatif, est donné pour une meilleure compréhension de l'invention et n'exclut pas l'utilisation de la structure thermomécanique selon l'invention dans d'autres systèmes spatiaux.

Dans la suite de la description, l'expression « structure thermomécanique » désigne une structure dimensionnée mécaniquement et thermiquement pour à la fois supporter des équipements et réguler leurs températures. Le terme « satellite » désigne un satellite artificiel. Un exemple de satellite 51 équipé d'un instrument 52 d'observation est par exemple représenté à la figure 8. Les expressions synonymes « fabrication additive », ALM (*Additive Layer Manufacturing*) et « impression 3D » sont indifféremment employées pour désigner tout procédé de mise en forme d'une pièce par empilement de couches successives ou par ajout quelconque de matière assisté par ordinateur.

La figure 2 représente un plan focal 100 selon l'invention, comprenant une structure thermomécanique 10 métallique, par exemple en un seul bloc, ainsi que des équipements électroniques 20 fixés à ladite structure thermomécanique. La structure thermomécanique 10 comprend par exemple deux radiateurs disposés latéralement. Un radiateur rapporté 30 est par exemple fixé à la structure thermomécanique. Ce radiateur rapporté se présente par exemple sous la forme d'une plaque 30 thermiquement conductrice au contact de la structure thermomécanique 10. Chaque radiateur permet de dissiper de la chaleur vers l'environnement spatial dans lequel opère le plan focal.

La figure 6 représente un plan focal comprenant une structure thermomécanique 10 selon l'invention. La figure 7 en montre une vue éclatée illustrant le montage du plan focal, ce montage étant facilité notamment par le nombre réduit de pièces.

Le plan focal 100 comprend ici une pluralité d'équipements électroniques 20 fixés à la structure thermomécanique 10 dont une paire de capteurs photosensibles 22a et 22b chacun en liaison de communication avec un composant 21a et 21b électronique de contrôle et de traitement des données générées par les capteurs photosensibles. Les capteurs 22a et 22b photosensibles sont disposés symétriquement par rapport à un plan médian. Les composants 21a et 21b électroniques de contrôle et de traitement sont également disposés, l'un par rapport à l'autre, symétriquement par rapport au plan médian.

Ainsi dans la structure thermomécanique, les interfaces pour les capteurs 22a et 22b photosensibles sont disposées symétriquement par rapport au plan médian et les interfaces 12 pour les composants 21a et 21b électroniques sont également disposées symétriquement par rapport au plan médian.

Des appendices 15 de la structure thermomécanique viennent en périphérie de la structure thermomécanique pour recevoir le radiateur 30 rapporté. Ces appendices 15 se présentent par exemple sous la forme de pattes incurvées à angle droit. La plaque rapportée 30 est optionnelle selon les configurations nécessitant par exemple un moyen de refroidissement additionnel en plus des radiateurs de la structure thermomécanique. De plus le montage du plan focal et notamment de ses composants électroniques est facilité.

Comme représenté à la figure 3, la structure thermomécanique 10, selon l'exemple de réalisation illustré, est conformée pour s'adapter à des équipements particuliers et à un profil de mission donné. La structure thermomécanique 10 comprend notamment deux radiateurs latéraux 11a et 11b.

En variante, la structure thermomécanique pourrait comprendre un seul radiateur. La structure thermomécanique pourrait également comprend un nombre plus important de radiateurs, comme par exemple quatre radiateurs reliés chacun à la partie centrale 13.

Comme représenté à la figure 3, la structure thermomécanique comprend une partie centrale 13 située entre les deux radiateurs et formant deux interfaces 17 pour les capteurs photosensibles. La partie centrale est prolongée latéralement par les deux radiateurs de la structure thermomécanique.

La structure thermomécanique 10 comprend aussi deux traverses 12 pour former une interface pour chacun des composants électroniques de contrôle associé à un des capteurs photosensibles. Ces traverses se prolongent également latéralement par les deux radiateurs 11a et 11b.

La structure thermomécanique 10 comprend ici une pluralité d'éléments de jonction 14a, se présentant par exemple sous la forme d'arceaux, joignant chaque interface d'un capteur photosensible à une interface d'un composant électronique de contrôle. Ainsi la chaleur des composants électroniques de contrôle peut être évacuée via les radiateurs 11a et 11b servant pour la régulation thermique des interfaces des capteurs photosensibles. Les arceaux 14a joignent la traverse 12 à la partie centrale 13 et s'étendent dans des plans sensiblement perpendiculaires à un axe longitudinal de la traverse. Outre les arceaux supérieurs 14a, la structure thermomécanique 10 comporte des arceaux inférieurs 14b, visibles sur la figure 4 par exemple, s'étendant entre la partie centrale 13 et une traverse inférieure reliant les radiateurs latéraux 11a et 11b.

La structure thermomécanique 10 comprend aussi des pieds de fixation 16. Ces pieds de fixation 16 comprennent chacun une semelle pourvue de trous permettant l'installation du plan focal 100 sur une plateforme porte-instrument d'un satellite par exemple, via des moyens adaptés tels que des vis et des boulons.

Comme représenté à la figure 2, la structure thermomécanique 10 métallique permet de supporter les équipements électroniques 20 et de réguler leurs températures pour maintenir leur température dans une plage adaptée à leur fonctionnement nominal. A cet effet, la structure thermomécanique 10 métallique est partiellement creuse de sorte à définir une cavité hermétique dans laquelle circule de manière diphasique et continue un fluide caloporteur, assurant ainsi un transport thermique par transition de phase entre les points chauds et les points froids du plan focal. Le transport de l'énergie calorifique est ainsi assuré entre des zones chaudes vers des zones froides de la structure thermomécanique 10. Comme représenté à la figure 4bis, cette cavité 32, dite diphasique, s'étend par exemple dans les radiateurs latéraux 11a et 11b et dans la partie centrale 13 supportant les capteurs photosensibles. La partie centrale 13 présente par exemple une forme sensiblement en parallélépipède rectangle comprenant une ouverture sensiblement parallélépipédique traversante. La partie centrale 13 est ainsi constituée de deux cloisons 33A et 33B longitudinales, sensiblement rectangulaires, prolongées par deux cloisons latérales 34A et 34B sensiblement rectangulaires. Les cloisons longitudinales 33A et 33B reçoivent sur leur face externe les interfaces pour les capteurs photosensibles. Les cloisons longitudinales 33A et 33B sont prolongées par ailleurs par les arceaux 14a et 14b de liaison avec la traverse 12 ainsi que par les appendices 15 en L de fixation du radiateur rapporté. Les cloisons latérales 34A et 34B sont prolongées, sur leur face externe, par un bras 35 dans lequel s'étend la cavité diphasique 32 et réalisant une liaison avec les radiateurs de la structure thermomécanique. La cavité diphasique 32 peut s'étendre également dans les traverses 12. La cavité diphasique 32 s'étend par exemple également dans les arceaux 14a reliant les traverses à la partie centrale 13. La cavité diphasique 32 peut également s'étendre dans les appendices 15 de fixation du radiateur rapporté. Ainsi le liquide et la vapeur peuvent circuler simultanément dans la cavité diphasique. En effet la cavité diphasique est faite de rainures ou pores contribuant au transport du liquide et de zones creuses dans lesquelles la vapeur circule. La première cavité peut par exemple réaliser deux fonctions : l'étalement de la chaleur sous les détecteurs, assuré par une géométrie interne de type poreux à cet endroit de la cavité, et le transport de la chaleur depuis les détecteurs vers les radiateurs, assuré par des géométries internes de types rainures entre les détecteurs et les radiateurs.

On peut par exemple prévoir une cavité diphasique unique reliant par un flux continu l'ensemble des points chauds à l'ensemble des points froids de la structure thermomécanique. La figure 3bis montre un exemple de circulation du fluide caloporteur dans sa forme liquide, des points froids vers les points chauds. Pour plus de clarté du schéma de la figure 3bis, la circulation de la vapeur n'a pas été représentée.

On peut aussi envisager plusieurs cavités diphasiques reliant chacune par un flux continu des points chauds à des points froids de la structure thermomécanique.

Comme représenté sur la figure 3, des points chauds considérés en premier lieu correspondent aux interfaces 17 pour les capteurs photosensibles. L'interface 17 est par exemple au plus près de la cavité diphasique, c'est-à-dire que l'épaisseur de la paroi séparant la cavité diphasique de l'interface de fixation du capteur photosensible est choisie la plus petite, en respectant les contraintes de tenue mécanique. En second lieu les éléments électroniques de contrôle et de traitement des données sont refroidis par le même circuit thermique. La cavité diphasique vient par exemple au plus près de cette autre interface. La chaleur est évacuée vers les radiateurs.

On peut aussi envisager de refroidir une unique interface pour un capteur photosensible ou pour un autre type de composant électronique.

La cavité pour le fluide diphasique permet une circulation de vapeur des points chauds vers les points de refroidissement où la vapeur se condense en liquide. Ce liquide circule à sens inverse par capillarité, des points froids vers les points chauds. La taille des pores ou des rainures dans lesquels circule le liquide, est par exemple choisie décroissante en allant des points froids vers les points chauds.

Dans les arceaux 14a, la phase liquide circule, par exemple, de la cavité 121 dans la traverse 12 vers la cavité 131 dans la partie centrale 13, tandis que la vapeur circule de la cavité 131 dans la partie centrale 13 vers la cavité 121 dans la traverse 12.

Comme représenté à la figure 3, les radiateurs latéraux 11a et 11b sont agencés de part et d'autre de la partie centrale 13. Les radiateurs 11a et 11b présentent ici une forme étendue de plaque légèrement pliée de concavité orientée vers l'intérieur de la structure thermomécanique. Les deux radiateurs latéraux 11a et 11b constituent en effet des extrémités opposées de dissipation thermique vers l'environnement spatial.

La traverse 12, selon l'exemple de réalisation illustré, est une poutre tubulaire sensiblement prismatique se terminant par deux extrémités évasées et recourbées vers les radiateurs latéraux 11a et 11b. Ainsi, le fluide caloporteur contenu dans la structure thermomécanique 10 peut circuler entre les radiateurs et la traverse 12. De la même façon, le fluide caloporteur circule entre les radiateurs et la partie centrale 13 supportant les interfaces 17 pour les capteurs photosensibles.

La structure thermomécanique comprend en outre une ou plusieurs cavités recevant un matériau à changement de phase (PCM). Ces cavités pour le matériau PCM peuvent être disposées au plus près de la cavité diphasique ou dans une portion pleine de la structure thermomécanique. Les radiateurs comportent par exemple chacun une cavité 111 apte à recevoir un matériau à changement de phase (PCM).

L'utilisation de ces cavités pour matériau PCM, en plus des cavités diphasiques ménagées dans le volume de certaines parties de la structure thermomécanique 10, permet d'augmenter la performance du contrôle thermique de ladite structure thermomécanique et, par là-même, du plan focal 100.

La ou les cavités PCM sont aptes à stocker, par exemple, de l'énergie calorifique. Ainsi, les maximums de température peuvent être amortis. Cette absorption d'énergie est optimisée via la structure interne des cavités PCM : la surface interne de la cavité de stockage peut être notamment constituée d'une structure treillis en lien avec la paroi de la cavité de manière à augmenter les surfaces d'échanges entre le métal et le matériau PCM.

L'absorption d'énergie va permettre de limiter la quantité d'énergie à transporter vers les radiateurs lors des phases de prise d'images. L'énergie stockée sera par exemple restituée et évacuée par les radiateurs, lors des périodes où les radiateurs sont moins sollicités.

La traverse 12 peut également comporter, sur sa partie centrale, une pluralité de cavités 121 pour matériau PCM.

La partie centrale 13, selon l'exemple de réalisation illustré, peut également comporter des cavités 131 pour matériau PCM afin d'améliorer le refroidissement des équipements, ces cavités pouvant être placées à proximité immédiate des interfaces 17 des capteurs à refroidir.

La structure thermomécanique 10 peut ainsi comprendre une pluralité de cavités 111, 121 et 131 pour matériau PCM réparties à différents endroits choisis pour optimiser le contrôle thermique du plan focal 100. Le matériau PCM est adapté en fonction des localisations des cavités PCM selon qu'elles sont positionnées proches de points froids ou de points chauds. En raison des changements de phase du matériau PCM, ces cavités sont étanches.

Le matériau PCM est choisi en fonction de sa température de changement de phase, généralement de fusion, elle-même choisie en fonction de la température de fonctionnement des équipements. En effet, un matériau PCM assure un transfert thermique par chaleur latente, autrement dit, il est capable de stocker ou de céder de l'énergie par simple changement de phase, et ce de façon isotherme (à température égale à sa température de changement de phase).

Les pattes 15, selon l'exemple de réalisation illustré en figure 4, sont au nombre de six et sous forme de tubes incurvés à leur base, les bases étant reliées à la partie centrale 13. La partie allongée des pattes 15 est quant à elle fixée à la plaque 30 de dissipation thermique rapportée comme représenté sur la figure 2.

Telle que représentée sur les figures 3 à 5, la structure thermomécanique 10 est réalisée en un seul bloc métallique par un procédé de fabrication additive. La structure thermomécanique réalisée en un seul bloc monolithique peut être composée de plusieurs sous-ensembles générés chacun par (ALM) fabrication additive par couche de matière, puis solidarisés entre eux, par exemple par soudage.

Chaque sous-ensemble peut contenir une portion de la cavité diphasique. Chaque sous-ensemble peut également contenir une portion d'une ou plusieurs cavités pour PCM. Chaque sous-ensemble peut également contenir une portion d'une ou plusieurs interfaces pour les capteurs photosensibles. Chaque sous-ensemble peut également contenir une portion d'une ou plusieurs interfaces pour les équipements électroniques de contrôle. Chaque sous-ensemble peut aussi contenir une portion d'un radiateur de la structure thermomécanique.

Une ou plusieurs cavités ou les interfaces peuvent aussi être réalisées dans un même sous-ensemble produit par ALM. Un radiateur peut également être réalisé dans un même sous-ensemble produit par ALM.

Le procédé de fabrication additive permet de réaliser la structure thermomécanique 10, avec une optimisation des formes et des volumes des parties creuses diphasique et des cavités PCM. Une fabrication additive par la technique de fusion laser sur lit de poudre peut par exemple être utilisée, celle-ci permettant de réaliser des pièces métalliques de formes fines, complexes et intriquées.

De préférence, la structure thermomécanique 10 est en titane ou en Invar, ces matériaux présentant de très faibles coefficients de dilatation et assurant donc une très bonne stabilité mécanique de la structure thermomécanique 10 selon l'invention.

La structure thermomécanique pour plan focal selon l'invention, apporte ainsi un avantage industriel notable et ouvre de nouvelles perspectives pour la réalisation de structures thermiquement et mécaniquement plus performantes.

Il ressort clairement de la présente description que certains éléments de la structure thermomécanique peuvent être modifiés, remplacés ou supprimés et que certains ajustements peuvent être apportés à leurs formes et dimensions, sans pour autant sortir du cadre des revendications.

## Revendications

1. Structure (10) thermomécanique thermorégulée pour plan focal (100) apte à fonctionner en environnement spatial, comprenant au moins une première interface (17) pour supporter au moins un premier équipement électronique dissipatif (22a, 22b), ladite structure étant métallique et comprenant au moins un radiateur (11a, 11b) pour dissiper de la chaleur dans l'environnement spatial et au moins une première cavité (32) de transport d'énergie calorifique par un fluide à changement de phase se trouvant à l'état liquide ou gazeux, ladite première cavité (32) s'étendant en partie à l'intérieur dudit radiateur et assurant un transport thermique direct entre ladite première interface et ledit radiateur, ladite structure étant **caractérisée en ce qu'**elle comprend en outre au moins une deuxième cavité (111, 121, 131) de stockage d'énergie calorifique encapsulant un matériau à changement de phase se trouvant à l'état solide ou liquide.

2. Structure selon la revendication 1, **caractérisée en ce que** chaque première cavité est distincte et disjointe de chaque deuxième cavité.

3. Structure selon la revendication 1 ou 2, **caractérisée en ce qu'**elle comprend une unique première cavité et une pluralité de deuxièmes cavités dont au moins certaines de ces deuxièmes cavités sont disposées au plus près de la première cavité.

4. Structure (10) thermomécanique selon l'une quelconque des revendications précédentes, dans laquelle ladite première cavité s'étend au plus près de ladite première interface (17) et contribue à étaler de manière homogène l'énergie générée au niveau dudit premier équipement électronique dissipatif (22a, 22b).

5. Structure thermomécanique selon l'une quelconque des revendications précédentes, dans laquelle ladite première cavité comprend une géométrie interne de type poreux située au niveau de ladite première interface, assurant une diffusion multidirectionnelle de l'énergie calorifique, la géométrie interne de type poreux étant prolongée par une géométrie interne comprenant des rainures favorisant une diffusion de l'énergie calorifique le long de ces rainures, vers les radiateurs.

6. Structure selon l'une quelconque des revendications précédentes, comprenant au moins deux radiateurs (11a, 11b), disposés latéralement et de part et d'autre de ladite première interface (17), ladite première cavité s'étendant dans ces radiateurs.

7. Structure selon l'une quelconque des revendications précédentes, comprenant au moins une deuxième interface (12) pour supporter au moins un deuxième équipement électronique dissipatif (21a, 21b), ladite première cavité s'étendant au plus près de ladite deuxième interface (12) et assurant un transport thermique direct entre ladite deuxième interface et ledit radiateur.

8. Structure selon la revendication précédente, dans laquelle ladite première cavité comprend une géométrie interne de type poreux située au niveau de ladite deuxième interface, assurant une diffusion multidirectionnelle de l'énergie calorifique et contribuant à étaler de manière homogène l'énergie générée au niveau dudit deuxième équipement électronique dissipatif (21a, 21b).

9. Structure selon la revendication 7 ou 8, comprenant une paire de premières interfaces et une paire de deuxièmes interfaces agencés symétriquement selon un plan médian, pour supporter respectivement une paire de premiers équipements électroniques dissipatifs et une paire de deuxièmes équipements électroniques dissipatifs agencés symétriquement selon le plan médian.

10. Structure selon l'une des revendications 7 à 9, comprenant une pluralité d'éléments de jonction (14a) entre ladite première interface et ladite deuxième interface et dans lesquels s'étend ladite première cavité diphasique.

11. Structure l'une quelconque des revendications précédentes, **caractérisée en ce qu'**elle est réalisée en un seul bloc monolithique composé de plusieurs sous-ensembles générés par fabrication additive par couche de matière, chaque sous-ensemble pouvant contenir une portion de ladite première cavité, une portion de ladite deuxième cavité, une portion de ladite première interface, et/ou une portion dudit radiateur.

12. Structure selon l'une quelconque des revendications précédentes, comprenant en outre une pluralité d'appendices de fixation (15) dans lesquels s'étend la première cavité et destinés à recevoir un radiateur (30) rapporté de dissipation de chaleur dans l'environnement spatial.

13. Plan focal (100) apte à fonctionner en environnement spatial, **caractérisé en ce qu'**il comprend une structure (10) thermomécanique selon l'une quelconque des revendications précédentes et au moins un capteur photosensible fixé la première interface de la structure (10) thermomécanique.

14. Plan focal (100) selon la revendication 13, comprenant au moins un composant électronique de contrôle et de traitement en liaison de communication avec ledit capteur photosensible, ce composant électronique de contrôle et de traitement étant fixé sur ladite deuxième interface de la structure (10) thermomécanique.

15. Instrument d'observation spatiale (52), **caractérisé en ce qu'**il comprend un plan focal (100) selon la revendication 13 ou 14.

16. Satellite artificiel (51), **caractérisé en ce qu'**il comprend un instrument d'observation spatiale (52) selon la revendication 15.

17. Satellite artificiel, **caractérisé en ce qu'**il comprend une structure (10) thermomécanique selon l'une quelconque des revendications 1 à 10 et au moins un composant électronique dissipatif fixé sur une première interface (17) de ladite structure (10) thermomécanique selon l'une quelconque des revendications 1 à 10 ou sur une deuxième interface (12) de ladite structure (10) thermomécanique selon l'une quelconque des revendications 7 à 10.

## Patentansprüche

1. Thermoregulierte thermomechanische Struktur (10) für eine Fokalebene (100), die in der Lage ist, in einer Weltraumumgebung zu operieren, umfassend mindestens eine erste Schnittstelle (17), um mindestens eine erste dissipative elektronische Ausrüstung (22a, 22b) zu unterstützen, wobei die Struktur metallisch ist und mindestens einen Radiator (11a, 11b), um die Wärme in der Raumumgebung zu dissipieren, und mindestens einen ersten Hohlraum (32) für den Transport der Wärmeenergie durch ein Phasenwechselfluid im flüssigen oder gasförmigen Zustand umfasst, wobei sich der erste Hohlraum (32) teilweise in das Innere des Radiators erstreckt und einen direkten Wärmetransport zwischen der ersten Schnittstelle und dem Radiator bereitstellt, wobei die Struktur **dadurch gekennzeichnet ist, dass** sie ferner mindestens einen zweiten Hohlraum (111, 121, 131) zur Speicherung von Wärmeenergie umfasst, der ein Phasenwechselmaterial einkapselt, das sich im festen oder flüssigen Zustand befindet.

2. Struktur nach Anspruch 1, wobei jeder erste Hohlraum deutlich und getrennt von jedem zweiten Hohlraum ist.

3. Struktur nach Anspruch 1 oder 2, **dadurch gekennzeichnet, dass** sie einen einzigen ersten Hohlraum und eine Vielzahl von zweiten Hohlräumen umfasst, von denen mindestens einige dieser zweiten Hohlräume so nahe wie möglich an dem ersten Hohlraum angeordnet sind.

4. Thermomechanische Struktur (10) nach einem der vorstehenden Ansprüche, bei der sich der erste Hohlraum so nahe wie möglich an der ersten Schnittstelle (17) erstreckt und dazu beiträgt, die an der ersten dissipativen elektronischen Ausrüstung (22a, 22b) erzeugte Energie gleichmäßig zu verteilen.

5. Thermomechanische Struktur nach einem der Ansprüche, bei der der erste Hohlraum eine Innengeometrie vom porösen Typ umfasst, die sich an der ersten Schnittstelle befindet und eine multidirektionale Diffusion der Wärmeenergie gewährleistet, wobei die Innengeometrie vom porösen Typ durch eine Innengeometrie erweitert ist, die Rillen umfasst, die die Diffusion der Wärmeenergie entlang dieser Rillen zu den Radiatoren fördern.

6. Struktur nach einem der Ansprüche, die mindestens zwei Radiatoren (11a, 11b) umfasst, die seitlich und auf beiden Seiten der ersten Schnittstelle (17) angeordnet sind, wobei sich der erste Hohlraum in diese Radiatoren erstreckt.

7. Struktur nach einem der Ansprüche, umfassend mindestens eine zweite Schnittstelle (12) zum Unterstützen mindestens einer zweiten dissipativen elektronischen Ausrüstung (21a, 21b), wobei sich der erste Hohlraum so nahe wie möglich an der zweiten Schnittstelle (12) erstreckt und einen direkten Wärmetransport zwischen der zweiten Schnittstelle und dem Radiator bereitstellt.

8. Struktur nach dem vorstehenden Anspruch, wobei der erste Hohlraum eine innere Geometrie vom porösen Typ umfasst, die sich an der zweiten Schnittstelle befindet und eine multidirektionale Diffusion der Wärmeenergie gewährleistet und dazu beiträgt, die erzeugte Energie homogen auf die zweite dissipative elektronische Ausrüstung (21a, 21b) zu verteilen.

9. Struktur nach Anspruch 7 oder 8, umfassend ein Paar erster Schnittstellen und ein Paar zweiter Schnittstellen, die symmetrisch nach einer Mittelebene angeordnet sind, um jeweils ein Paar erster dissipativer elektronischer Ausrüstungen und ein Paar zweiter dissipativer elektronischer Ausrüstungen zu unterstützen, die symmetrisch nach der Mittelebene angeordnet sind.

10. Struktur nach einem der Ansprüche 7 bis 9, umfassend eine Vielzahl von Abzweigungselementen (14a) zwischen der ersten Schnittstelle und der zweiten Schnittstelle, in die sich der erste Diphasenhohlraum erstreckt.

11. Struktur nach einem der vorstehenden Ansprüche, **dadurch gekennzeichnet, dass** sie als ein einziger monolithischer Block hergestellt wird, der aus mehreren durch additive Fertigung erzeugten Unterbaugruppen pro Materialschicht besteht, wobei jede Unterbaugruppe einen Abschnitt des ersten Hohlraums, einen Abschnitt des zweiten Hohlraums, einen Abschnitt der ersten Schnittstelle und/oder einen Abschnitt des Radiators enthalten kann.

12. Struktur nach einem der vorstehenden Ansprüche, ferner umfassend eine Vielzahl von Befestigungsansätzen (15), in die sich der erste Hohlraum erstreckt und die dazu bestimmt sind, einen Radiator (30) zu empfangen, der für die Wärmeabgabe im Raum vorgesehen ist.

13. Fokalebene (100), die in der Lage ist, in einer Weltraumumgebung zu operieren, **dadurch gekennzeichnet, dass** sie eine thermomechanische Struktur (10) nach einem der vorstehenden Ansprüche und mindestens einen lichtempfindlichen Sensor umfasst, der an der ersten Schnittstelle der thermomechanischen Struktur (10) befestigt ist.

14. Fokalebene (100) nach Anspruch 13, umfassend mindestens eine elektronische Steuerungs- und Verarbeitungskomponente, die mit dem lichtempfindlichen Sensor kommuniziert, wobei diese elektronische Steuerungs- und Verarbeitungskomponente an der zweiten Schnittstelle der thermomechanischen Struktur (10) befestigt ist.

15. Instrument zur Raumbeobachtung (52), **dadurch gekennzeichnet, dass** es eine Fokalebene (100) nach Anspruch 13 oder 14 umfasst.

16. Künstlicher Satellit (51), **dadurch gekennzeichnet, dass** er ein Instrument zur Raumbeobachtung (52) nach Anspruch 15 umfasst.

17. Künstlicher Satellit, **dadurch gekennzeichnet, dass** er eine thermomechanische Struktur (10) nach einem der Ansprüche 1 bis 10 und mindestens eine dissipative elektronische Komponente umfasst, die an einer ersten Schnittstelle (17) der thermomechanischen Struktur (10) nach einem der Ansprüche 1 bis 10 oder an einer zweiten Schnittstelle (12) der thermomechanischen Struktur (10) nach einem der Ansprüche 7 bis 10 befestigt ist.

## Claims

1. Thermoregulated thermomechanical structure (10) for a focal plane (100) suitable for operating in a space environment, comprising at least one first interface (17) for supporting at least one first dissipative electronic equipment (22a, 22b), said structure being **characterized in that** it is metallic and that it comprises at least one radiator (11a, 11b) for dissipating heat into the space environment and at least one first heat energy transport cavity (32) via a phase change fluid that is in the liquid or gaseous state, said first cavity (32) extending partially within said radiator and providing direct thermal transport between said first interface and said radiator, said structure further comprising at least one second heat energy storage cavity (111, 121, 131) encapsulating a phase change material that is in the solid or liquid state.

2. Structure according to claim 1, **characterised in that** each first cavity is distinct and disjoint from each second cavity.

3. Structure according to claim 1 or 2, **characterised in that** it comprises a single first cavity and a plurality of second cavities of which at least some of these second cavities are disposed as close as possible to the first cavity.

4. Thermomechanical structure (10) according to any one of the preceding claims, wherein said first cavity extends as close as possible to said first interface (17) and contributes to homogeneously spreading out the energy generated at said first dissipative electronic equipment (22a, 22b).

5. Thermomechanical structure according to any one of the preceding claims, wherein said first cavity comprises an internal geometry of porous type located at said first interface, providing a multi-directional diffusion of the heat energy, the internal geometry of porous type being prolonged by an internal geometry comprising grooves favouring a diffusion of the heat energy along these grooves, towards the radiators.

6. Structure according to any one of the preceding claims, comprising at least two radiators (11a, 11b), disposed laterally and on either side of said first interface (17), said first cavity extending into these radiators.

7. Structure according to any one of the preceding claims, comprising at least one second interface (12) for supporting at least one second dissipative electronic equipment (21a, 21b), said first cavity extending as close as possible to said second interface (12) and providing direct thermal transport between said second interface and said radiator.

8. Structure according to the preceding claim, wherein said first cavity comprises an internal geometry of porous type located at said second interface, providing a multi-directional diffusion of the heat energy and contributing to homogeneously spreading out the energy generated at said second dissipative electronic equipment (21a, 21b).

9. Structure according to claim 7 or 8, comprising a pair of first interfaces and a pair of second interfaces arranged symmetrically along a median plane, for supporting respectively a pair of first dissipative electronic equipment and a pair of second dissipative electronic equipment arranged symmetrically along a median plane.

10. Structure according to one of claims 7 to 9, comprising a plurality of junction elements (14a) between said first interface and said second interface and wherein said first two-phase cavity extends.

11. Structure according to any one of the preceding claims, **characterised in that** it is made of a single monolithic block consisting of a plurality of sub-assemblies generated by additive layer manufacturing, each subassembly being able to contain a portion of said first cavity, a portion of said second cavity, a portion of said first interface, and/or a portion of said radiator.

12. Structure according to any one of the preceding claims, further comprising a plurality of attachment appendages (15) wherein the first cavity extends and intended to receive an add-on radiator (30) for dissipating heat into the space environment.

13. Focal plane (100) suitable for operating in a space environment, **characterised in that** it comprises a thermomechanical structure (10) according to any one of the preceding claims and at least one photosensitive sensor attached to the first interface of the thermomechanical structure (10).

14. Focal plane (100) according to claim 13, comprising at least one electronic processing and control component in communication link with said photosensitive sensor, this electronic processing and control component being attached on said second interface of the thermomechanical structure (10).

15. Space observation instrument (52), **characterised in that** it comprises a focal plane (100) according to claim 13 or 14.

16. Artificial satellite (51), **characterised in that** it comprises a space observation instrument (52) according to claim 15.

17. Artificial satellite, **characterised in that** it comprises at least one dissipative electronic component attached on an interface of a thermomechanical structure (10) according to any one of claims 1 to 10.
